# EUROPEAN PATENT APPLICATION

(11) **EP 1 698 650 A1**
(43) Date of publication of application: **06.09.2006**
(21) Application number: 05101610.3
(22) Date of filing: 02.03.2005
(51) Int. Cl.: C08G 65/22

(54) **Polymerization of hexafluoropropylene oxide**

(71) Applicant: 3M Innovative Properties Company, St. Paul, Minnesota 55144-1000 (US)
(72) Inventor: HINTZER, Klaus, 1831, Diegem (BE); OBERMAIER, Egon, 1831, Diegem (BE); SCHWERTFEGER, Werner, 1831, Diegem (BE)
(74) Representative: Voortmans, Gilbert J.L.

(57) **Abstract**

The present invention provides a process for oligomerization of hexafluoropropylene oxide, the process comprising polymerizing a mixture of hexafluoropropylene oxide and hexafluoropropene in the presence of an aprotic organic solvent using KF as a catalyst.

## Description

### 1. Field of the invention.

The present invention relates to the polymerization of hexafluoropropylene oxide (HFPO). In particular, the present invention relates to a polymerization of HFPO that yields a desired degree of polymerization combined with a low amount of low molecular weight oligomers of HFPO.

### 2. Background of the invention.

Polymerization or oligomerization of HFPO leads to perfluoropolyethers that have found utility in a wide variety of applications. For example, the resulting perfluoropolyethers can be used in the manufacturing of surfactants or may be used to prepare fluorochemical compounds suitable for the treatment of various substrates so as to render these oil- and/or water repellent. Usually, optimal results in these applications require a fairly low degree of polymerization, i.e. oligomers of HFPO. From an environmental point of view, such low molecular weight products of HFPO, e.g. having a degree of polymerization of only 2 to 4 HFPO molecules are not desired.

But, it has been found difficult to prepare HFPO oligomers with a low degree of polymerization combined with a low or minimal amount of oligomers having a degree of polymerization of 4 or less. Furthermore, it would be desirable to find a robust polymerization process in which the degree of polymerization and amount of oligomers with a low degree of polymerization does not vary too much with the polymerization conditions and in particular is moderate dependent or independent on the amount of hexafluoropropylene oxide and polymerization catalyst used.

The polymerization of HFPO is well known in the art and has been described in a variety of publications. US 6,127,517 describes the polymerization of HFPO in the presence of hexafluoropropylene (HFP) using CsF as a catalyst. In J. Macromol. Sci. Chem., A8 (3), 499-520 (1974) it has been disclosed that HFP prevents chain transfer during the oligomerization of HFPO. DE 2026686 also discloses polymerization of HFPO in the presence of HFP. As a catalyst, active carbon and CsF are used in the examples.

GB 1 292 268 discloses silver nitrate as a catalyst for the polymerization of HFPO to produce predominantly dimers of HFPO.

### 3. Summary of the invention.

The present invention provides a process for oligomerization of hexafluoropropylene oxide, the process comprising polymerizing a mixture of hexafluoropropylene oxide and hexafluoropropene in the presence of an aprotic organic solvent using KF as a catalyst.

It has been found that the above process generally yields only a low amount of HFPO oligomers having a degree of polymerization of less than 5. It has further been found that generally, the degree of polymerization and molecular weight distribution shows little variation with changes in the weight ratio of catalyst to HFPO. In a typical embodiment, the process can provide oligomers having a degree of polymerization of 6 to 10 with the amount of oligomers having a degree of polymerization of 4 or less being low, e.g. not more than 10% by weight, preferably not more than 5% by weight of the total weight of HFPO oligomers produced. Generally, the polymerization process can be carried out in a convenient, easy and cost effective way, yielding the desired HFPO oligomers in an economically effective way. Usually, the production of HFPO results in HFP /HFPO mixtures from which HFP needs to be separated, which is costly process. The polymerization of HFPO according to the invention can use the crude mixture of HFP/HFPO without separation of the HFP.

### 4. Detailed description of the invention.

The polymerization of HFPO according to the present invention is carried out using a mixture of HFPO and HFP. While the amount of HFP may vary widely, the molar ratio of HFP to HFPO is typically between 4 and 0.05. In one embodiment, the molar ratio may be between 3 and 0.2. In another embodiment, the molar ratio could be between 2 and 0.25.

The polymerization of HFPO is started using KF as a catalyst. The KF catalyst is typically dissolved or dispersed in an aprotic polar organic solvent. Suitable solvents that can be used include crown ethers and glymes such as monoglyme, diglyme, triglyme and tetraglyme. Further suitable solvents include tetrahydrofuran and 1,4-dioxane. A mixture of solvents can be used as well. Generally, the solvents used in the polymerization should be dried. Typically, the solvents can be dried to a residual water content of not more than 500ppm. In one embodiment the residual water content of a solvent used could be less than 200ppm or less than 100ppm. Solvents with even lower residual water content of for example less than 50ppm may be used as well.

The use of KF fluoride as a catalyst in the process according to the present invention can provide the advantage that the average degree of polymerization and molecular weight distribution is less dependent on the amount of catalyst used relative to the amount HFPO fed to the polymerization. Accordingly, varying amounts of HFPO may be fed to the polymerization using a same amount of catalyst without substantially affecting the molecular weight and distribution of the corresponding oligomers produced. Generally, the weight percentage of KF catalyst is between 20 and 0.1 based on the amount of HFPO fed to the polymerization. In one embodiment, the weight percentage of KF catalyst is between 15 and 0.3. In another embodiment, the weight percentage of KF catalyst is between 10 and 0.5.

The polymerization of HFPO is typically carried out at a temperature of-30°C to 50°C. According to a particular embodiment, the polymerization temperature can be between -10 and 20°C. Oligomers having an average polymerization degree of 6 to 10 while yielding low amounts of oligomers having a polymerization degree of less than 5 can typically be produced at a polymerization temperature between -10 and 10°C. It will generally be beneficial to maintain the polymerization temperature constant during polymerization, e.g. within +/- 5°C.

The reaction time is generally not critical and typically, the polymerization will be conducted for a time sufficient to convert most or all of the HFPO into oligomers. Depending on the polymerization temperature used and amount of HFPO to be converted, the reaction time may vary between 10 minutes and 3 hours. In a typical embodiment, the reaction time is between ½ hour and 1 hour.

The polymerization or oligomerization is typically carried out in a stainless steel vessel. The catalyst solution is typically added to the stainless steel vessel, which may then be brought under a vacuum. The mixture of HFPO and HFP is typically supplied to the vessel as a gas mixture. Once the feed of this gas mixture is complete, the reaction is generally continued until most or all of the HFPO is converted.

The following examples further illustrated the invention.

### EXAMPLES

The following general polymerization procedure was used in each of the examples:
A stainless steel pressure vessel equipped with an effective stirrer and a baffle was used. The internal temperature was controlled by a heating-cooling jacket. A thermocouple in the reaction mixture served as reference for automatic temperature control. The dry reactor was filled with the catalyst consisting of dry KF and diglyme, inerted with dry nitrogen, and set under vacuum (450 to 500 hPa absolute). The mixer was started, the internal temperature was adjusted to the desired temperature, and the HFPO / HFP (1 to 1 by weight) feed was started. After the planned amount of the gas mixture was fed to the reactor, the feed line was closed and the batch was allowed to react at the preset temperature. Gas samples were taken on a regular basis to control the conversion. After conversion of most of the HFPO, the remaining HFP was evaporated. The batch was allowed to reach 20 °C, the mixer was stopped and the lower phase was separated. A sample of the lower phase was converted to the methyl ester and analyzed by gas chromatography.

The following table describes the results:

### Example 1

| | |
|---|---|
| Catalyst: | 11.6 g KF and 501 g diglyme |
| Reaction temperature: | 0 °C |
| HFPO/HFP fed to reactor: | 596 g |
| Amount of lower phase: | 266 g |

### Example 2

| | |
|---|---|
| Catalyst: | 11.6 g KF and 501 g diglyme |
| Reaction temperature: | 0°C |
| HFPO/HFP fed to reactor: | 1100 g |
| Amount of lower phase: | 563 g |

### Example 3

| | |
|---|---|
| Catalyst: | 11.6 g KF and 501 g diglyme |
| Reaction temperature: | 0°C |
| HFPO/HFP fed to reactor: | 2100 g |
| Amount of lower phase: | 1057 g |

**Composition of lower phase (GC results, area %):**

| | Analytical composition* | | | | | | | |
|---|---|---|---|---|---|---|---|---|
| | (HFP)2 | (HFP)3 | (HFPO)5 | (HFPO)6 | (HFPO)7 | (HFPO)8 | (HFPO)9 | (HFPO)10 |
| Example 1 | 7 | 2.7 | 0.8 | 2.5 | 14.9 | 43.3 | 22.6 | 3.2 |
| Example 2 | 4.4 | 3.6 | 1.2 | 5.4 | 23.4 | 38.5 | 18 | 3.4 |
| Example 3 | 5.6 | 1.1 | 2.1 | 6.4 | 18.3 | 34.6 | 23.4 | 5.4 |

| | | | | | | | | |
|---|---|---|---|---|---|---|---|---|
| ^{*} there were no HFPO oligomers in which n<5 detected in the resulting composition. | | | | | | | | |

## Claims

1. Process for oligomerization of hexafluoropropylene oxide, said process comprising polymerizing a mixture of hexafluoropropylene oxide and hexafluoropropene in the presence of an aprotic organic solvent using KF as a catalyst.

2. Process according to claim 1 wherein the oligomerization is carried out at a temperature between -10°C and 10°C.

3. Process according to any of the previous claims wherein the molar ratio of hexafluoropropylene oxide to hexafluoropropylene is between 4 and 0.05.

4. Process according to any of the previous claims wherein the aprotic solvent is selected from glymes, tetrahydrofuran and 1,4-dioxane.

5. Process according to any of the previous claims wherein the amount of KF is between 20 and 0.1 % by weight based on the weight of hexafluoropropylene oxide fed to the polymerization.
